# EUROPEAN PATENT APPLICATION

(11) **EP 4 848 050 A1**
(43) Date of publication of application: **02.12.2026**
(21) Application number: 26179907.6
(22) Date of filing: 20.05.2026
(51) Int. Cl.: G06F 3/048, G06F 40/56

(54) **APPARATUS AND METHOD FOR IMPROVING AUTOMATION SCENARIO**

(30) Priority: 26.05.2025 KR 20250068525
(71) Applicant: Samsung SDS Co., Ltd., Seoul 05510 (KR)
(72) Inventor: Jung, Hwang Young, 05510 Seoul (KR); Kim, Hyo Young, 05510 Seoul (KR); Lee, Jae Cheol, 05510 Seoul (KR)
(74) Representative: Grünecker Patent- und Rechtsanwälte PartG mbB

(57) **Abstract**

An automation scenario improvement apparatus and method are provided. An automation scenario improvement method according to one embodiment comprises: dividing an input scenario comprising a plurality of activities into one or more segments; generating natural language condensed information for one or more activities included in each divided segment; and reconstructing the input scenario by applying the natural language condensed information to a large language model. When an error occurs in an automation scenario, the scenario can be reconstructed into an optimized scenario without user intervention, thereby improving the flexibility and maintainability of the scenario.

## Description

### CROSS REFERENCE TO RELATED APPLICATION

This application claims priority from Korean Patent Application No. 10-2025-0068525, filed on May 26, 2025, which is hereby incorporated by reference for all purposes as if fully set forth herein.

### BACKGROUND

The disclosed embodiments relate to technology for diagnosing and improving automation scenarios using generative artificial intelligence.

Robotic Process Automation (RPA) is a technology in which an automation agent (or bot) automatically mimics and executes, in accordance with predetermined rules, business processes that a user repeatedly performs in a digital environment such as a personal computer. In an RPA system, a user predefines a series of task workflows (scenarios) in which the user interacts with objects on a screen, and an automation agent repeatedly executes tasks based on such scenarios, thereby improving work efficiency and minimizing human errors. In addition, Hyperautomation has recently been proposed as a concept that overcomes the limitations of Robotic Process Automation and extends the scope of automation. Hyperautomation refers to technology for intelligently automating the entire business processes of an enterprise on an end-to-end basis by combining various technologies and tools such as Robotic Process Automation as well as artificial intelligence (AI), machine learning (ML), process mining, Intelligent Document Processing (IDP), Business Process Management (BPM), and the like.

Robotic Process Automation or Hyperautomation requires automation scenarios for process automation. However, conventional process automation technology has a limitation known as scenario rigidity. That is, once a scenario is initially written and deployed, it frequently fails to flexibly respond to changes in the execution environment (e.g., system UI updates, irregular pop-ups, button position changes, use of activities dependent on dynamic results, and the like), resulting in task execution failures or errors. In such cases, the user must directly identify the cause of the error and manually modify and redeploy the scenario, thereby undermining the original purpose of automation adoption and significantly increasing maintenance costs.

Although techniques such as auto-healing have recently been partially applied, these are also limited to simple correction at the level of individual activities and are unable to automatically improve structural errors across an entire scenario. Accordingly, there is a demand for technology that can automatically diagnose a scenario in response to a changing environment and optimize the scenario without user intervention.

### SUMMARY

The disclosed embodiments are intended to provide technology for automatically diagnosing and improving automation scenarios and reconfiguring them into optimized scenarios without user intervention.

According to an exemplary embodiment, there is provided an automation scenario improvement method performed in a computing device having one or more processors and a memory storing one or more programs executed by the one or more processors, the method comprising: dividing an input scenario comprising a plurality of activities into one or more segments; generating natural language condensed information for one or more activities included in each divided segment; and reconstructing the input scenario by applying the natural language condensed information to a large language model.

In one embodiment, the dividing the input scenario may be configured to divide the plurality of activities into one or more segments such that an output-type activity among the plurality of activities becomes the last activity of each segment.

In one embodiment, the dividing the input scenario may be configured to, when a control-type activity is present among the plurality of activities, create a new segment starting from an activity immediately following the control-type activity such that the control-type activity is excluded from the new segment.

In one embodiment, the generating of the natural language condensed information may comprise: generating natural language summary information corresponding to each of the plurality of activities; and generating the natural language condensed information for each segment using the generated natural language summary information.

In one embodiment, the natural language summary information may be generated by applying, to the large language model, one or more of an identifier, properties, property values corresponding to the properties, and a natural language-based activity description of a corresponding activity.

In one embodiment, the natural language condensed information may be generated by merging natural language summary information of one or more activities included in each segment and applying the merged information to the large language model.

In one embodiment, the reconstructing of the scenario may be configured to reconstruct activities for each segment such that the output-type activity located last in each segment is maintained.

In one embodiment, the natural language condensed information may include properties and property values of activities included in a corresponding segment, and the reconstructing of the scenario may comprise applying the properties and the property values included in the natural language condensed information to the large language model.

In one embodiment, the reconstructing of the scenario may further comprise additionally applying, to the large language model, a scenario that was reconstructed in a previous step but determined to be unsuitable.

In one embodiment, the reconstructing of the scenario may further comprise: dividing the reconstructed scenario into one or more segments and generating natural language condensed information for one or more activities in each divided segment; comparing a similarity between natural language condensed information of the reconstructed scenario and natural language condensed information of the input scenario; and determining whether the reconstructed scenario is valid based on the similarity comparison result.

In one embodiment, the determining of whether the reconstructed scenario is valid may be configured to determine the reconstructed scenario as valid when the similarity comparison result is equal to or greater than a threshold value.

In one embodiment, the determining of whether the reconstructed scenario is valid may be configured to determine the reconstructed scenario as invalid when the reconstructed scenario is identical to a previously failed scenario.

In one embodiment, the method may further comprise, after the reconstructing of the input scenario, determining whether the reconstructed scenario operates normally.

In one embodiment, the determining of whether the reconstructed scenario operates normally may be configured to determine whether the reconstructed scenario operates normally by comparing an output value of the last activity of each divided segment with an output value when the input scenario operated normally.

According to another exemplary embodiment, there is provided an automation scenario improvement apparatus comprising one or more processors; a memory; and one or more programs, wherein the one or more programs are stored in the memory and configured to be executed by the one or more processors, and the one or more programs comprise: dividing an input scenario comprising a plurality of activities into one or more segments; generating natural language condensed information for one or more activities included in each divided segment; and reconstructing the input scenario by applying the natural language condensed information to a large language model.

In one embodiment, the dividing the input scenario may be configured to divide the plurality of activities into one or more segments such that an output-type activity among the plurality of activities becomes the last activity of each segment.

In one embodiment, the dividing the input scenario may be configured to, when a control-type activity is present among the plurality of activities, create a new segment starting from an activity immediately following the control-type activity such that the control-type activity is excluded from the new segment.

In one embodiment, the generating of the natural language condensed information may comprise: generating natural language summary information corresponding to each of the plurality of activities; and generating the natural language condensed information for each segment using the generated natural language summary information.

In one embodiment, the natural language summary information may be generated by applying, to the large language model, one or more of an identifier, properties, property values corresponding to the properties, and a natural language-based activity description of a corresponding activity.

In one embodiment, the natural language condensed information may be generated by merging natural language summary information of one or more activities included in each segment and applying the merged information to the large language model.

In one embodiment, the reconstructing of the scenario may be configured to reconstruct activities for each segment such that the output-type activity located last in each segment is maintained.

In one embodiment, the natural language condensed information may include properties and property values of activities included in a corresponding segment, and the reconstructing of the scenario may comprise applying the properties and the property values included in the natural language condensed information to the large language model.

In one embodiment, the reconstructing of the scenario may further comprise additionally applying, to the large language model, a scenario that was reconstructed in a previous step but determined to be unsuitable.

In one embodiment, the reconstructing of the scenario may further comprise: dividing the reconstructed scenario into one or more segments and generating natural language condensed information for one or more activities in each divided segment; comparing a similarity between natural language condensed information of the reconstructed scenario and natural language condensed information of the input scenario; and determining whether the reconstructed scenario is valid based on the similarity comparison result.

In one embodiment, the determining of whether the reconstructed scenario is valid may be configured to determine the reconstructed scenario as valid when the similarity comparison result is equal to or greater than a threshold value.

In one embodiment, the determining of whether the reconstructed scenario is valid may be configured to determine the reconstructed scenario as invalid when the reconstructed scenario is identical to a previously failed scenario.

In one embodiment, the method may further comprise, after the reconstructing of the input scenario, determining whether the reconstructed scenario operates normally.

In one embodiment, the determining of whether the reconstructed scenario operates normally may be configured to determine whether the reconstructed scenario operates normally by comparing an output value of the last activity of each divided segment with an output value when the input scenario operated normally.

According to another exemplary embodiment, there is provided a computer program stored in a computer-readable recording medium for executing on a computer the steps comprising: dividing an input scenario comprising a plurality of activities into one or more segments; generating natural language condensed information for one or more activities included in each divided segment; and reconstructing the input scenario by applying the natural language condensed information to a large language model.

According to the disclosed embodiments, when an error occurs in an automation scenario, it becomes possible to reconstruct the scenario into an optimized scenario without user intervention, thereby improving the flexibility and maintainability of the scenario.

In addition, according to the disclosed embodiments, a single general-purpose scenario can be made to respond to various situations through generative artificial intelligence, thereby extending the operational life of scenarios and significantly increasing reusability across various environments.

Furthermore, it becomes possible to go beyond simply repeatedly executing a written scenario and instead to understand the intent of the scenario and autonomously generate a new optimized scenario suited to a failure situation, thereby providing an effect that brings Robotic Process Automation and Hyperautomation one step closer to full automation.

### DESCRIPTION OF DRAWINGS

The above and other objectives, features, and advantages of the disclosure will be more clearly understood from the following detailed description, taken in conjunction with the accompanying drawings, in which:
FIG. 1 is a block diagram illustrating a system environment for executing and automatically improving an automation scenario according to one embodiment.
FIG. 2 is a flowchart illustrating an automation scenario according to one embodiment.
FIG. 3 is a flowchart illustrating a scenario obtained by reconstructing and improving the automation scenario shown in FIG. 2 by a scenario improvement apparatus according to one embodiment.
FIG. 4 is a flowchart illustrating an automation scenario improvement method according to one embodiment.
FIG. 5 is an exemplary diagram illustrating a scenario and activities according to one embodiment.
FIG. 6 is an exemplary diagram illustrating an example of dividing the scenario shown in FIG. 5 into a plurality of segments.
FIG. 7 is an exemplary diagram illustrating an example in which a control-type activity is present during the segment-dividing process of a scenario according to one embodiment.
FIG. 8 is a flowchart illustrating the step of summarizing and condensing activities for each segment according to one embodiment.
FIG. 9 is an exemplary diagram showing an example of generating natural language summary information for each activity shown in FIG. 6.
FIG. 10 is an exemplary diagram illustrating a process of generating condensed information for each segment from the natural language summary information for each activity generated in FIG. 9.
FIG. 11 is a flowchart illustrating in detail the reconstruction process of the input scenario according to one embodiment.
FIG. 12 is an exemplary diagram illustrating a scenario reconstructed using the natural language condensed information for each segment generated in FIG. 10.
FIGS. 13 and 14 are exemplary diagrams illustrating the suitability determination process of the reconstructed scenario as described above.
FIG. 15 is a block diagram illustrating a computing environment including a computing device suitable for use in the exemplary embodiments.

### DETAILED DESCRIPTION

Hereinafter, specific embodiments of the present invention will be described with reference to the drawings. The following detailed description is provided to facilitate a comprehensive understanding of the methods, apparatuses, and/or systems described herein. However, this is merely illustrative and the present invention is not limited thereto.

In describing embodiments of the present invention, when it is determined that a detailed description of known technology related to the present invention may unnecessarily obscure the gist of the present invention, such detailed description will be omitted. In addition, terms used hereinafter are defined in consideration of functions in the present invention, and may vary depending on the intentions or customs of users or operators. Therefore, such terms should be defined based on the content throughout this specification. Terms used in the detailed description are merely for describing embodiments of the present invention and should not be construed as limiting. Unless clearly used otherwise, singular expressions include plural meanings. In this description, expressions such as "comprising" or "including" are intended to indicate certain characteristics, numbers, steps, operations, elements, some or a combination thereof, and should not be construed to exclude the existence or possibility of one or more other characteristics, numbers, steps, operations, elements, or some or a combination thereof other than those described.

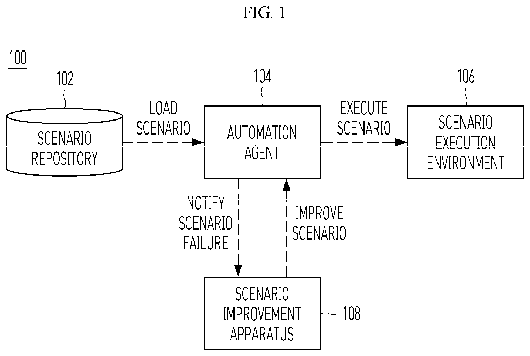

FIG. 1 is a block diagram illustrating a system environment (100) for executing and automatically improving an automation scenario according to one embodiment. As illustrated, the system environment (100) according to one embodiment includes a scenario repository (102), an automation agent (104), a scenario execution environment (106), and a scenario improvement apparatus (108).

The scenario repository (102) is a data storage space in which automation scenarios (hereinafter, "scenarios") to be executed by the automation agent (104) are stored. In the disclosed embodiments, a scenario refers to a series of task workflows written to automate a series of work procedures performed by a user. A scenario specifies in detail the actions to be performed at each step, and the automation agent (104) automatically executes tasks in a predetermined sequence based on such scenarios. In this specification, scenarios stored in the scenario repository (102) may be used for process automation not only in Robotic Process Automation but also in Hyperautomation. In the following description, scenarios are described primarily in the context of Robotic Process Automation for convenience, but it should be understood that this is merely exemplary and the disclosed embodiments are equally applicable to Hyperautomation without departing from the essential characteristics of the present invention.

A scenario may include one or more activities. In other words, a scenario may be understood as a sequence in which one or more activities are connected in time series. An activity is a basic unit element constituting a scenario, and refers to a command-unit automation component that performs a single function or operation such as a screen click, text input, information extraction, conditional branching, and the like. Each activity has a unique name and properties, and may include input values or output values. An activity may be the minimum execution unit when the automation agent (104) executes a scenario.

In one embodiment, the scenario repository (102) may include not only scenarios written by a user but also scenarios improved by the scenario improvement apparatus (108) described below. In addition, in some embodiments, the scenario repository (102) may store execution results of each stored scenario together, which may be used to verify scenarios rewritten during the scenario improvement process.

In the disclosed embodiments, the scenario repository (102) may include one or more of a removable disk drive, a hard disk drive, a direct access storage device ("DASD"), an optical drive (e.g., a CD drive, a DVD drive, etc.), a solid state storage drive ("SSD"), a network-attached storage, a storage area network, and/or a tape drive.

The automation agent (104) is an entity that executes scenarios stored in the scenario repository (102), loading scenarios from the scenario repository (102) and executing them in the scenario execution environment (106). The automation agent (104) sequentially interprets and executes each activity included in a scenario, and detects errors that occur during execution. When an error occurs, the automation agent (104) may be configured to transmit the relevant information to the scenario improvement apparatus (108) to improve the failed scenario. In the disclosed embodiments, errors in scenario execution may include, without limitation, all cases other than normal scenario execution, such as cases where execution of the scenario itself is impossible, cases where an error message is generated during scenario execution, or cases where the execution result of the scenario falls outside a preset range. In one embodiment, the automation agent (104) may be configured as hardware, software, or a combination thereof that is operable in a Robotic Process Automation or Hyperautomation environment.

The scenario execution environment (106) refers to a platform on which the automation agent (104) executes scenarios. The scenario execution environment (106) is a work environment that a user originally handled manually, such as a web browser, an ERP system, a business application, and the like, and the automation agent (104) can recognize user interface elements within the scenario execution environment (106) and automatically perform operations such as clicking, inputting, and extracting. Scenario execution results in the scenario execution environment (106) may be collected through the automation agent (104).

The scenario improvement apparatus (108), upon recognizing that an error has occurred during scenario execution through the automation agent (104), automatically identifies problems with the existing scenario and generates an improved scenario without user intervention.

Once a scenario has been created by a user, it possesses rigidity in that the scenario itself is not changed at the time of execution by the automation agent (104). However, as time passes, the execution success rate of scenarios created in the past may decrease for various reasons. In particular, when the operating environment at the time the scenario was written differs from the operating environment when the automation agent (104) executes it, scenarios written for the original environment may frequently fail to execute normally. It is impossible for a user to anticipate all such various execution environment changes when writing a scenario. Conventionally, when such an execution failure occurs, the user had to manually and repeatedly perform the process of directly recognizing the failure, reconfiguring the activities appropriate for the scenario operating environment, and redeploying the modified scenario.

However, this approach requires a human user to closely monitor execution failures and manually correct them, resulting in a long downtime (ranging from several hours to several days) between the occurrence of a scenario execution error and the correction and normal execution of the scenario, which is a major cause of efficiency degradation. In particular, since the activities included in scenarios used in actual work environments number as few as dozens and as many as several hundred, having a human directly modify an automation scenario already applied in the field is a costly task. Accordingly, in the disclosed embodiments, the scenario improvement apparatus (108) automatically reconfigures activities into the scenario most optimal for the purpose of scenario execution when an error occurs during execution, without user intervention, thereby maintaining the scenario always in the optimal state.

In one embodiment, the scenario improvement apparatus (108) improves problems with a scenario by using generative artificial intelligence, such as a large language model (LLM), to reconstruct a scenario in which an error has occurred. In order to improve an erroneous scenario without user intervention, it is necessary to analyze in natural language the content performed by the activities constituting the erroneous scenario and to reconstruct them as optimized activities, which requires the use of generative artificial intelligence such as a large language model capable of grasping context and performing question-answering.

In some embodiments, the scenario improvement apparatus (108) may utilize a large language model to group activities of an existing scenario, identify the intent of the scenario through natural language summarization and condensation, and derive an optimal combination of alternative activities based on the cause of execution failure. The improved scenario may be transmitted back to the automation agent (104) for execution, and may be stored in the scenario repository (102) as an improved scenario based on the execution result.

In some embodiments, the scenario improvement apparatus (108) may additionally utilize Retrieval-Augmented Generation (RAG) together with generative artificial intelligence. The large language model is used to summarize activities of a scenario based on input natural language or structured information, or to generate a new combination of activities. However, since general LLMs have not been trained on domain-specific information regarding activity types or properties of automation platforms, it is difficult to guarantee accurate understanding or analysis. To address this, in the disclosed embodiments, the scenario improvement apparatus (108) may pre-configure information about available activities using Retrieval-Augmented Generation. Data usable in Retrieval-Augmented Generation can be obtained from various sources such as Robotic Process Automation or Hyperautomation manuals, work guidelines, internet searches, and the like. Responses of the large language model generated with context reinforced through such Retrieval-Augmented Generation are advantageous in accurately reflecting the actual operations of automation activities, more precisely analyzing the intent of the scenario, and generating improved scenarios with a high probability of successful execution without user intervention.

In a general automation system, due to the structural rigidity in which a scenario is not changed after it is initially written until the time of execution, a problem arises in that scenario execution fails when the execution environment changes. For example, assuming a case where a scenario is to be written that accesses a search website, searches for a specific keyword, and scrapes the content of a detail page containing the keyword, such a scenario may be written to include the following processes:
- Opening a web page and navigating to a search site
- Entering a specific keyword in the search input field to initiate a search
- Sequentially clicking on the displayed search result page regions
- Scraping text from the opened page
- Scrolling the screen

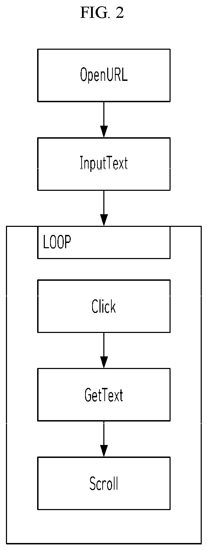

FIG. 2 is a flowchart showing the above-described automation scenario.

However, the above scenario may not operate as intended when the number of search results displayed on the screen changes or when the size of the region where each item of search results is positioned on the screen changes. The scenario improvement apparatus (108) may use generative artificial intelligence to understand the intent of the scenario and improve it to operate in accordance with the intent in various situations. For example, the scenario improvement apparatus (108) may improve the above scenario as follows:
- Using an "OpenAPI" activity to apply a keyword to a search page and retrieve search results
- Iterating through search result links to open each page
- Scraping text from the opened page

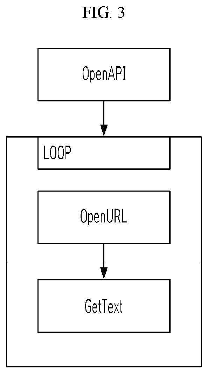

FIG. 3 is a flowchart showing the scenario obtained by reconstructing and improving the automation scenario shown in FIG. 2.

In the disclosed embodiments, the scenario repository (102), the automation agent (104), the scenario execution environment (106), and the scenario improvement apparatus (108) may be implemented within the same hardware or through different hardware, respectively. For example, in one embodiment, the scenario repository (102) may be a physical storage space provided within the same computing system as the automation agent (104). In another embodiment, the scenario repository (102) may be cloud storage connected to the automation agent (104) through a network. Similarly, the scenario improvement apparatus (108) may be implemented as a software component within the same computing system as the automation agent (104) according to an embodiment, or may be implemented on hardware separate from the automation agent (104) and configured to transmit and receive data to and from the automation agent (104) through a network.

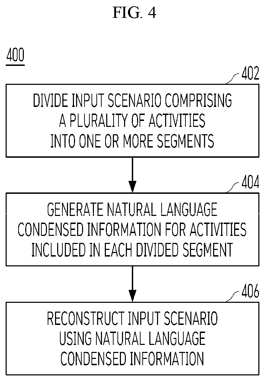

FIG. 4 is a flowchart illustrating an automation scenario improvement method (400) according to one embodiment. The illustrated method may be performed in a computing device having one or more processors and a memory storing one or more programs executed by the one or more processors, such as the scenario improvement apparatus (108) described above. In the illustrated flowchart, the method or process is described as being divided into a plurality of steps; however, at least some of the steps may be performed in a changed order, may be performed together in combination with another step, may be omitted, may be divided into sub-steps, or one or more steps not shown may be added and performed.

At step 402, the scenario improvement apparatus (108) divides an input scenario including a plurality of activities into one or more segments.

At step 404, the scenario improvement apparatus (108) generates natural language condensed information for one or more activities included in each divided segment.

At step 406, the scenario improvement apparatus (108) reconstructs the input scenario using the natural language condensed information.

Each step of the automation scenario improvement method (400) described above will now be described in detail.

### Segmentation and Division of Input Scenario

This step is a step of dividing the input scenario into one or more segments. Here, the input scenario refers to a scenario determined to have generated an error during execution by the automation agent (104). Before describing this step, the meanings of scenarios and activities as used in this specification are first explained as follows.

A scenario refers to a workflow written to automate a series of work procedures performed by a user. A scenario has the form of a sequence in which one or more activities are connected in chronological series. Here, an activity is a unit task (functional block) defined to enable the automation agent (104) to automatically perform a specific operation or command previously performed manually by a user. An activity is a core element constituting a scenario, and multiple activities are executed sequentially or conditionally.

In the disclosed embodiments, an activity included in a scenario may include the following information:
- Activity Name: unique name (or ID) of the activity
- Properties: input value (Input), output value (Output), object path of the target object (ObjectPath), condition settings, etc.
- Property values: values assigned to each property defined in the activity
- Description tag: a natural language description written for easy human understanding (optionally available)

In addition, in the disclosed embodiments, activities may be classified as follows according to three elements of input, action, and output:
- Input-type: an input value is given, a predetermined action is performed, and there is no output value
- Input-and-output-type: receives an input value, performs a predetermined action, and returns a corresponding output
- Output-type: performs a predetermined action without an input value and returns a corresponding output
- Control-type: used for workflow control (conditional branching, repetition, etc.) with no input/output

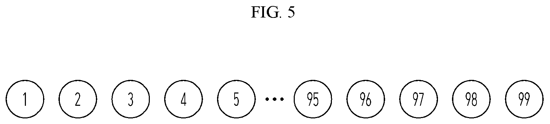

FIG. 5 is an exemplary diagram illustrating a scenario and activities according to one embodiment. The illustrated scenario exemplifies a scenario comprising a total of 99 activities from activity 1 to activity 99. However, in the disclosed embodiments, the number of activities constituting a scenario is not limited, and an appropriate number of activities may be included in a scenario depending on the purpose and use of the scenario.

A single scenario may include various subtask contexts. Each subtask context may be composed of a set of one or more activities; however, from the user's perspective, a scenario may be perceived simply as a sequential connection of multiple activities, and the automation agent (104) also simply follows and executes each activity included in the scenario sequentially. Therefore, in order to reconstruct and improve an erroneous scenario, it is necessary to divide the scenario into a plurality of segments according to context.

In one embodiment, the scenario improvement apparatus (108) divides a scenario into one or more segments based on output-type activities among the plurality of activities constituting the scenario. Specifically, the scenario improvement apparatus (108) may be configured to divide the plurality of activities into one or more segments such that an output-type activity becomes the last activity of each segment. In this specification, the output-type activity located last in each segment is referred to as a "pivot activity." The pivot activity serves as a reference for subsequently determining the suitability of reconstructed activities.

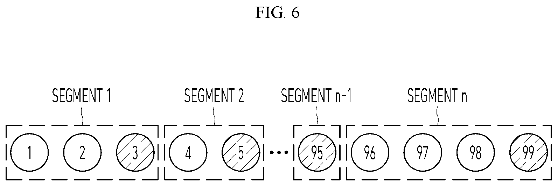

FIG. 6 shows an example of dividing the scenario shown in FIG. 5 into a plurality of segments. For example, assuming that activities 3, 5, ..., 95, and 99 among each activity shown in FIG. 5 are output-type activities, the scenario improvement apparatus (108) may divide the scenario into a plurality of segments such that each output-type activity becomes the last activity. In the illustrated example, activities 1 to 3 are divided into segment 1, activities 4 to 5 are divided into segment 2, activity 95 is divided into segment n-1, and activities 96 to 99 are divided into segment n, resulting in a total of n segments being created. In this case, activities 3, 5, 95, and 99, which are the last output-type activities of each segment, each become the pivot activity of the corresponding segment.

Meanwhile, when a control-type activity is present among the plurality of activities, the scenario improvement apparatus (108) may be configured to extract up to the output-type activity preceding the control-type activity as one segment, and create a new segment starting from the activity immediately following the control-type activity, excluding the control-type activity.

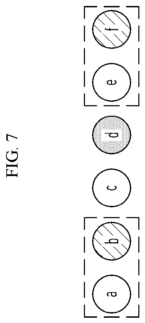

FIG. 7 is an exemplary diagram illustrating an example in which a control-type activity is present during the segment-dividing process of a scenario according to one embodiment. As shown in FIG. 7, assume that the scenario includes six activities from activity a to activity f, of which b and f are output-type activities and d is a control-type activity. The scenario improvement apparatus creates one segment starting from activity a up to activity b, which is the last output-type activity preceding the control-type activity d, and creates a new segment starting from activity e, the activity immediately following activity d. That is, in the illustrated example, a total of two segments are created, one comprising activities a and b, and another comprising activities e and f. In this case, activities c and d are not included in any segment, and therefore these activities maintain their original form even in the subsequent activity reconstruction process.

### Summarization and Condensation of Activities

At step 404, the scenario improvement apparatus (108) generates natural language condensed information for one or more activities included in each divided segment. Although a large language model is a language model capable of remembering context and responding to subsequent queries or responses, it tends to have reduced response accuracy when queries are long or the scope of provided context is wide. To address this, in the disclosed embodiments, the system is configured to improve the accuracy of analysis through the large language model by appropriately dividing the activities included in the scenario, summarizing each activity, and then condensing them again.

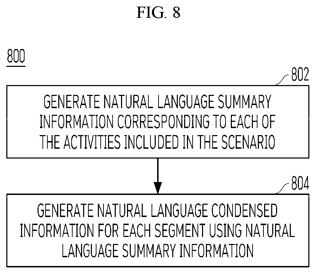

FIG. 8 is a flowchart illustrating the step (404) of summarizing and condensing activities for each segment according to one embodiment.

At step 802, the scenario improvement apparatus (108) generates natural language summary information corresponding to each of the plurality of activities included in the scenario. This step is for individually summarizing the activities constituting each segment before performing natural language condensation for segment-by-segment activities. By summarizing each activity in this manner, the large language model can easily understand the context of each activity.

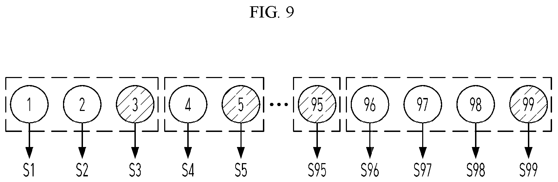

FIG. 9 is an exemplary diagram showing an example of generating natural language summary information for each activity shown in FIG. 6. As illustrated, the scenario improvement apparatus (108) may be configured to generate natural language summaries S1 to S99 corresponding to each of activities 1 to 99.

In one embodiment, the natural language summary information for each activity may be generated by applying, to the large language model, one or more of the identifier, properties, property values corresponding to the properties, and a natural language-based activity description of each activity. In one embodiment, the properties and property values may be configured in JSON format; however, it should be noted that the disclosed embodiments are not limited to a specific representation format of properties and property values.

The scenario improvement apparatus (108) may input one or more of the identifier, properties, property values corresponding to the properties, and a natural language-based activity description of each activity to the large language model, and may generate natural language summary information for each activity using an output value output from the large language model.

The following is an example of a summarization prompt to be passed to the large language model for generating natural language summary information for each activity in the scenario improvement apparatus:

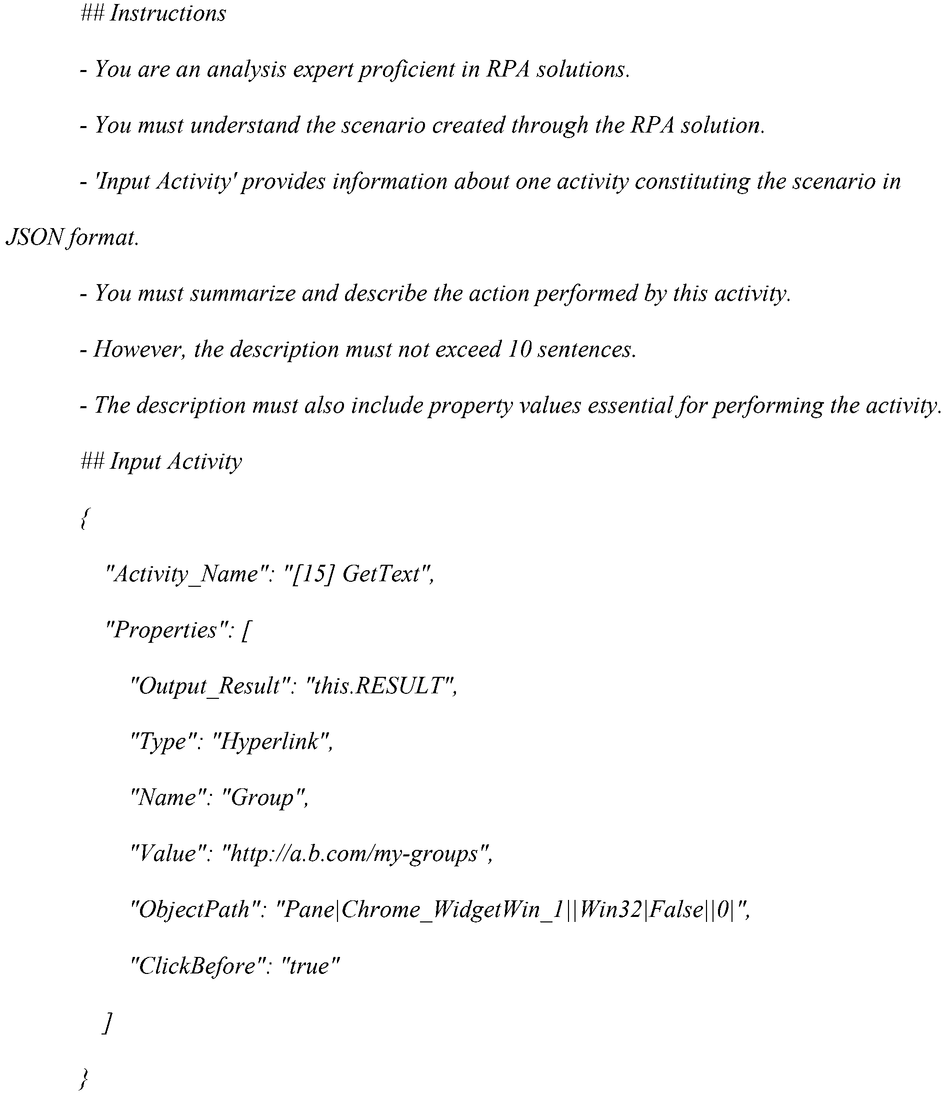

It should be understood that the above prompt is merely exemplary, and the disclosed embodiments are not limited to any specific type of prompt.

The following is an example of a response returned by the large language model to the above exemplary prompt:

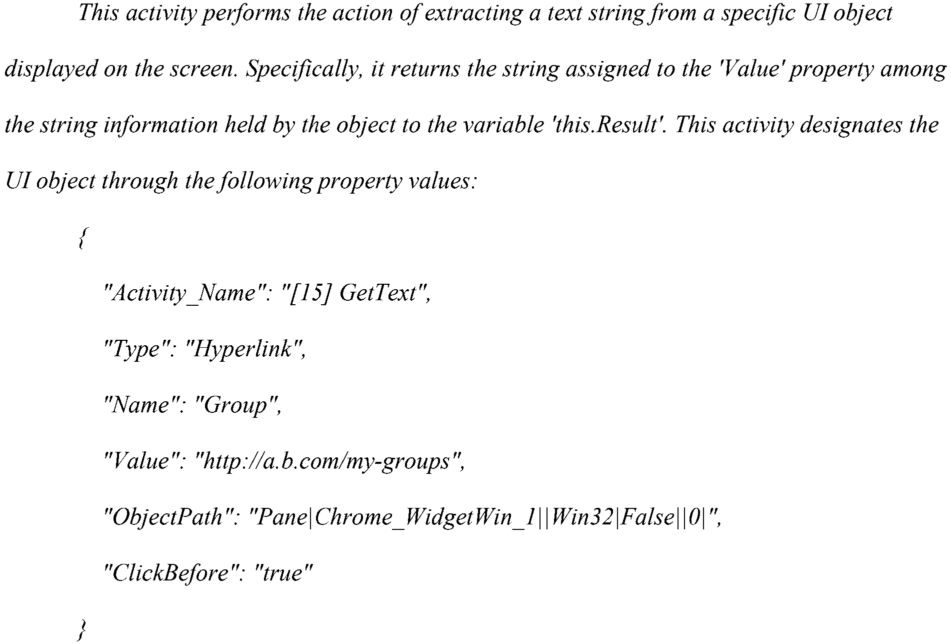

At step 804, the scenario improvement apparatus (108) generates natural language condensed information for each segment using the natural language summary information generated at step 802. In one embodiment, the natural language condensed information may be generated by merging natural language summary information of one or more activities included in each segment and applying the merged information to the large language model.

In the embodiments of this specification, condensation of activities refers to steps for grouping a plurality of activities constituting an existing scenario into a single unit of execution intent and reconfiguring them into a more concise and optimized set of activities. This process does not merely substitute activities on a 1:1 basis, but rather aims to summarize the complex existing procedures in a purpose-centric manner and convert them into a minimal activity configuration capable of effectively achieving that purpose.

The base information used in the condensation process is the natural language description (natural language summary information) obtained by first segmenting the activities within the scenario (step 402) and summarizing the activity content of each segment (step 802). The natural language summary information for each activity is then passed again to the large language model, which analyzes the execution intent of the corresponding segment and generates natural language condensed information integrated for each segment.

The natural language condensed information for each segment of activities generated through the large language model is configured to maintain properties and property values that can be actually reflected in the automation scenario, along with descriptions in natural language form that humans can easily understand. For example, the properties and property values may be configured in JSON format; however, it should be noted that the disclosed embodiments are not limited to a specific representation format of properties and property values.

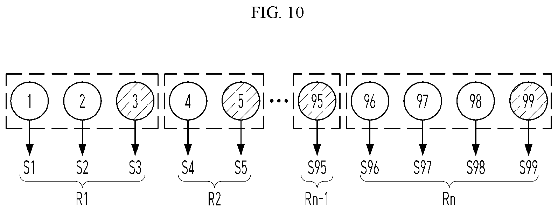

FIG. 10 is an exemplary diagram illustrating a process of generating condensed information for each segment from the natural language summary information for each activity generated in FIG. 9. As illustrated, the scenario improvement apparatus (108) generates natural language condensed information R1 from natural language summaries S1 to S3 of activities 1 to 3 of the first segment, natural language condensed information R2 from natural language summaries S4 to S5 of activities 4 to 5 of the second segment, natural language condensed information Rn-1 from natural language summary S95 of activity 95 of the (n-1)-th segment, and natural language condensed information Rn from natural language summaries S96 to S99 of activities 96 to 99 of the n-th segment, respectively.

The following exemplifies the natural language condensed information for each segment generated through step 804. As exemplified below, the natural language condensed information for each segment includes a natural language description for the corresponding segment and property values of activities included in the corresponding segment.

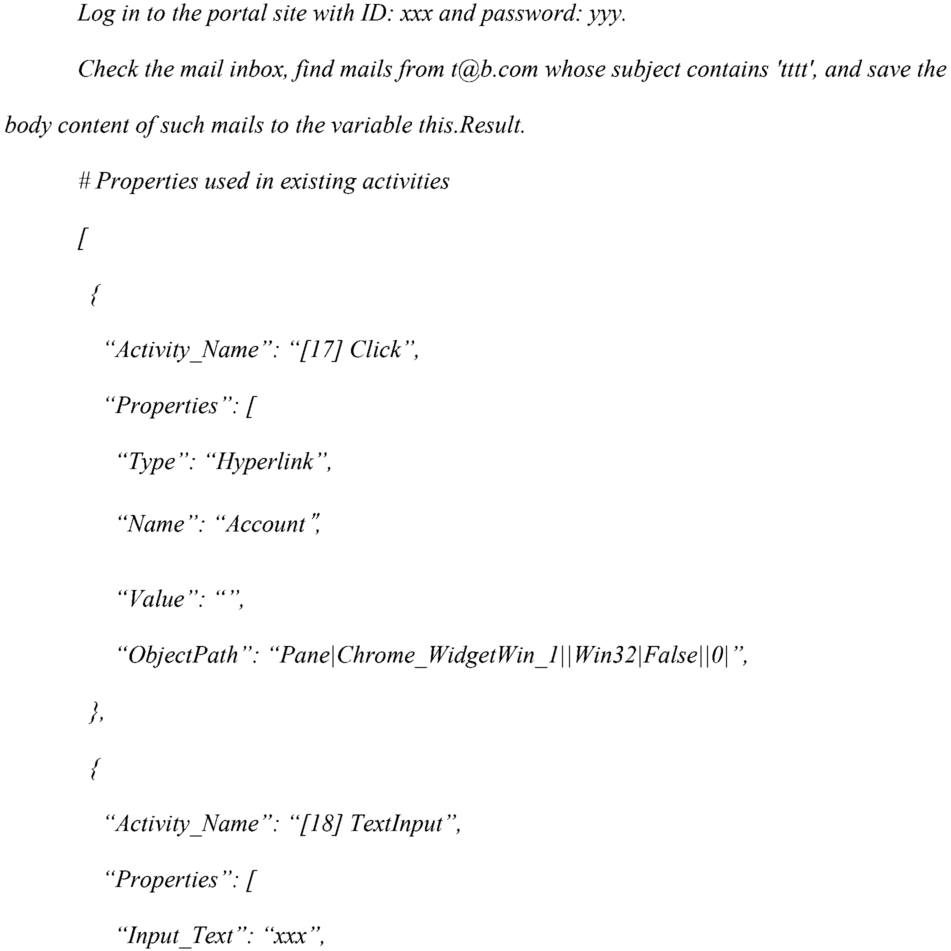

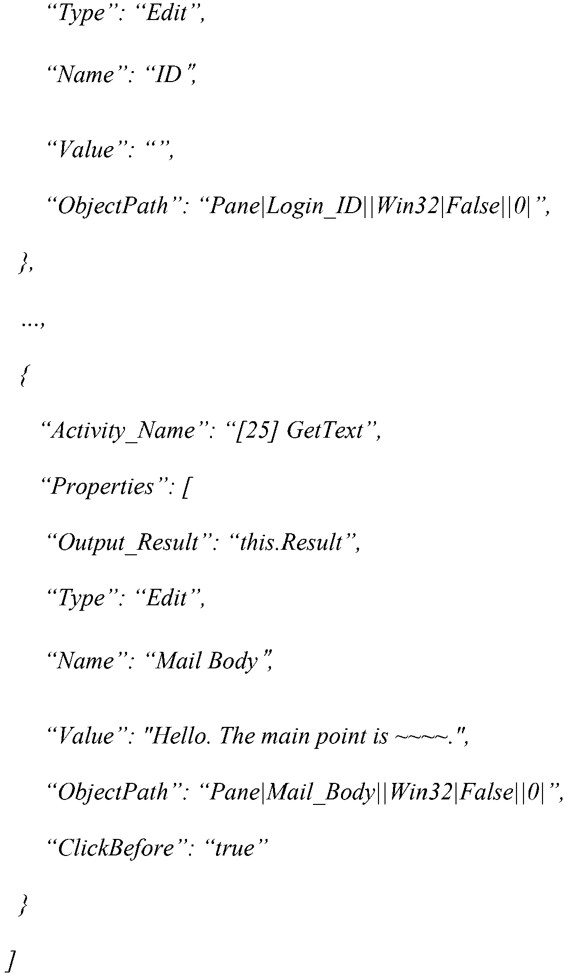

### Reconstruction of Input Scenario

At step 406, the scenario improvement apparatus (108) reconstructs the input scenario using the natural language condensed information. This step is a process of automatically generating a new combination of activities that can replace the activities of the segment that caused the error when an error occurs during execution of the existing scenario. This process may also be performed using generative artificial intelligence, such as a large language model. The scenario improvement apparatus (108) can generate an automated improved scenario suited to the context of the scenario, rather than merely correcting the existing scenario, through the natural language condensed information for each segment generated in the previous step.

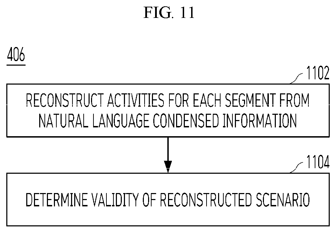

FIG. 11 is a flowchart illustrating in detail the reconstruction process (406) of the input scenario according to one embodiment.

At step 1102, the scenario improvement apparatus (108) reconstructs activities for each segment from the natural language condensed information for each segment generated through step 404. In one embodiment, the scenario improvement apparatus (108) may input the natural language condensed information for each segment to the large language model, and may generate reconstructed activities for each segment using the output value of the large language model.

In one embodiment, the scenario improvement apparatus (108) may, in the process of reconstructing activities for each segment, ensure that the output-type activity (pivot activity) located last in each segment is maintained. That is, the scenario improvement apparatus may request the large language model through a prompt to reconstruct activities for each segment while maintaining the existing pivot activity, together with the condensed information for each segment. This is to ensure that the output results of the scenario are maintained in a form comparable to the existing results.

Also, in one embodiment, the scenario improvement apparatus (108) may provide to the large language model the properties and property values of existing activities included in the natural language condensed information for each segment. For example, the properties and property values of the existing activities may be provided to the large language model while being maintained in JSON format. In this manner, the scenario improvement apparatus (108) provides the properties and property values of existing activities so that this property information is not lost but appropriately reflected in the newly reconstructed activities.

In one embodiment, the scenario improvement apparatus (108) may additionally provide to the large language model a scenario that was reconstructed in a previous reconstruction process but determined to be invalid. This is to prevent the large language model from repeatedly generating the same failed scenario.

In this manner, the embodiments of this specification are configured to perform reconstruction of the scenario segment by segment based on condensed information generated for each segment, rather than reconstructing the entire scenario at once. Automation scenarios generally consist of from dozens to hundreds of activities, which include various functions such as inputs, outputs, and conditional branching. When such a large set of activities is analyzed or improved at once using a generative language model, some information may be omitted or the consistency of context may deteriorate due to the limitations of the large language model's token processing capacity, resulting in degraded analysis accuracy. Therefore, in the disclosed embodiments, rather than processing the entire scenario, the scenario is divided into intent-centric unit segments, condensed information is generated for each segment, and reconstruction is performed for each segment, thereby improving the accuracy of the reconstructed output.

In addition, in the disclosed embodiments, each segment is divided based on an output-type activity (pivot activity) that outputs the results of activity execution. That is, in the disclosed embodiments, each segment has a clear functional purpose, enabling more accurate reconstruction and verification based on this. Furthermore, improving the scenario on a segment-by-segment basis has the advantage that the improvement result of each segment can be independently determined. For example, even if a particular segment fails, there is no need to repeat the entire scenario - only the corresponding segment needs to be reconstructed - thereby improving improvement efficiency and reducing system load. The activity sequence reconstructed through this process has meaning as an optimal scenario candidate capable of replacing the scenario in which the error originally occurred.

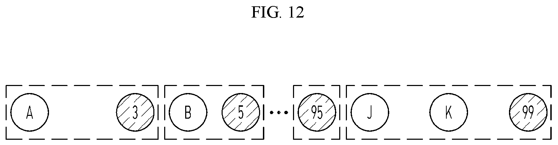

FIG. 12 is an exemplary diagram illustrating a scenario reconstructed using the natural language condensed information for each segment generated in FIG. 10. As illustrated, it can be seen that existing activities 1 and 2 of the first segment are reconstructed into activity A, existing activity 4 of the second segment is reconstructed into activity B, and existing activities 96 to 98 of the n-th segment are reconstructed into activities J and K, respectively. However, the pivot activity of each segment is maintained regardless of the reconstruction process. As such, the reconstructed activity sequence may not exactly match the existing activity sequence on a 1:1 basis, except for the last pivot activity.

Next, at step 1104, the scenario improvement apparatus (108) determines whether the scenario reconstructed at step 1102 is valid.

Executing the improved activities reconstructed for each segment again in the actual environment is a relatively time-consuming task. Therefore, in the disclosed embodiments, the scenario improvement apparatus (108) first performs pre-validation of the validity of the scenario reconstructed by the large language model.

In one embodiment, the scenario improvement apparatus (108) is configured to perform validity determination by re-summarizing and condensing the reconstructed scenario through the same process as the preceding scenario summarization and condensation process, and comparing the result with the previously summarized and condensed result. Using this method, it is possible to determine whether the existing scenario and the reconstructed scenario have mutual reversibility.

Specifically, the scenario improvement apparatus (108) may be configured to divide the reconstructed scenario into one or more segments through the process described in FIGS. 4 and 8, generate natural language condensed information for one or more activities in each divided segment, compare the similarity between the natural language condensed information of the reconstructed scenario and the natural language condensed information of the existing scenario, and determine whether the reconstructed scenario is valid based on the similarity comparison result.

In one embodiment, the process of comparing the similarity between the natural language condensed information of the reconstructed scenario and the natural language condensed information of the existing scenario may use, without limitation, various methods such as using a traditional string comparison algorithm such as LCS (Longest Common Subsequence), embedding strings as vectors to compare cosine similarity, or querying a generative artificial intelligence model for similarity comparison.

In one embodiment, the scenario improvement apparatus (108) may determine the reconstructed scenario as valid when the similarity comparison result is equal to or greater than a preset threshold value.

Also, in one embodiment, the scenario improvement apparatus (108) may determine the reconstructed scenario as invalid when the reconstructed scenario is identical to a previously failed scenario.

If the reconstructed scenario is determined to be invalid, the scenario improvement apparatus (108) may repeatedly perform the segment-by-segment activity reconstruction step of step 1102 until a valid scenario is derived.

### Normal Operation Determination of Reconstructed Scenario

Meanwhile, the automation scenario improvement method (400) according to one embodiment may further include a step of determining whether the reconstructed scenario, whose validity has been primarily verified, operates normally. This step may be performed after the performance of step 406.

In one embodiment, the step of determining whether the reconstructed scenario operates normally may be performed by comparing the output value of the last activity in each segment with the corresponding output from the original, normal operation.

In the disclosed embodiments, the step of determining normal operation of the reconstructed scenario is a step of determining whether the scenario automatically generated by the large language model is actually executable, and finally deciding whether it can be adopted as an improved scenario. This step is configured to determine the suitability of the scenario through a quantitative and automated verification method, rather than simple execution.

The scenario reconstructed through the large language model is executed in the scenario execution environment (106) by the automation agent, and the scenario improvement apparatus (108) determines the suitability of the improved scenario based on the execution result. That is, while the validity determination of the previous step is based primarily on the similarity between the reconstructed scenario and the existing scenario, the suitability determination of this step differs in that it is based on the actual execution results of the reconstructed scenario in the scenario execution environment (106).

In one embodiment, the suitability determination of the reconstructed scenario is made based on the output result of the pivot activity of each segment. That is, the scenario improvement apparatus (108) determines the success or failure of each scenario segment based on the output value of each pivot activity. As described above, a pivot activity is an output-type activity that performs functions such as text extraction and value return, and when its result value matches the expected value, the corresponding segment is considered a "success."

In one embodiment, the expected output value (ground truth) used as the standard for suitability determination may be a statistical output value collected based on success history data from the time the scenario was first written and operated normally. For example, the automation agent (104) may record the output results of scenarios that have been normally executed over a certain period of time in the scenario repository (102) or another storage area (not shown), and the scenario improvement apparatus (108) may compare the output results with the result values of the reconstructed scenario to determine the suitability of the reconstructed scenario. In one embodiment, the comparison may be performed, without limitation, by applying various comparison algorithms such as simple string comparison or pattern matching.

Comparing the output values of the reconstructed scenario with the output values of the existing scenario during normal operation is based on the assumption that each scenario was operating normally without any problems at the time it was initially deployed and operated. This is because primary verification of normal operation would have been completed at the time each scenario was first written and began operation. In this case, a certain number or more of successful execution results for the scenario are accumulated in the scenario repository (102) or another similar storage area, and the execution results of each activity (including result values in the case of output-type activities) are also preserved. Therefore, by comparing the result values of the existing pivot activity during normal operation with the activity result values of the reconstructed scenario, it is possible to determine the suitability of the reconstructed activity, i.e., whether it operated normally.

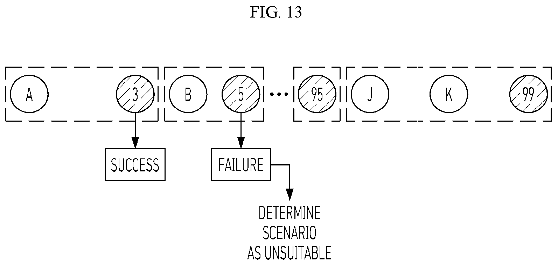

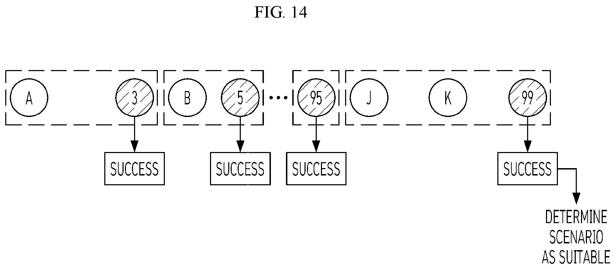

FIGS. 13 and 14 are exemplary diagrams illustrating the suitability determination process of the reconstructed scenario as described above. As illustrated, the scenario improvement apparatus (108) executes the reconstructed scenario for each activity segment in the scenario execution environment (106), while comparing the result values of pivot activities to determine the success or failure of the entire reconstructed scenario.

FIG. 13 is an exemplary diagram illustrating a case in which, as a result of executing the reconstructed scenario in the scenario execution environment (106), the execution result of some pivot activities is determined to be a failure. The illustrated example shows a case where success was achieved in the first segment but failure occurred in the second segment. If even one pivot activity fails, the scenario improvement apparatus (108) determines the entire scenario as an unsuitable scenario and performs the scenario reconstruction process of step 406 again. In this case, the scenario improvement apparatus (108) may additionally provide information about the failed activities to the large language model to prevent the large language model from regenerating the same scenario.

FIG. 14 is an exemplary diagram illustrating a case in which, as a result of executing the reconstructed scenario in the scenario execution environment (106), the execution results of all pivot activities are determined to be successful. When all pivot activity outputs of all activity segments are finally determined to be successful in this manner, the scenario improvement apparatus (108) finalizes the scenario as the final improved scenario and stores it in the scenario repository (102) so that the automation agent (104) can subsequently execute it.

According to the disclosed embodiments, the following advantageous effects can be expected from various aspects.

First, from the perspective of scenario authors, the burden and resulting constraints of having to consider various possible cases when writing a scenario can be reduced. The biggest reason why many costs are incurred in writing a scenario is the fatigue of having to write the scenario while considering as many possibilities and cases as possible that may change in the future. In order to consider all possible scenarios that may arise during scenario writing, numerous control-type activities such as branching and repetition must be included, which also increases the complexity of the scenario accordingly.

However, according to the disclosed embodiments, since existing scenarios can be automatically improved in response to changes in the execution environment and the like, the burden and constraints of scenario writing are reduced, and dependency on expert users for scenario writing can be lowered. In addition, since a certain level of scenario success quality can be guaranteed, even novice or intermediate users with less experience in scenario writing can easily write scenarios, thereby reducing the costs invested in scenario writing accordingly.

Next, from the perspective of scenario operation, since scenarios written in the past can be flexibly applied to various operating environments, the reusability of scenarios can be improved. Previously, due to the rigidity of scenarios, even scenarios performing the same operations had to be equipped with multiple scenarios depending on the version of the automation agent (104) or the type of the scenario execution environment (106). However, according to the disclosed embodiments, the need to equip scenarios tailored to various environments is reduced and the effectiveness of general-purpose scenario use is increased, thereby improving the operational life of scenarios and significantly reducing maintenance costs.

Finally, from the perspective of expanding the functionality of the automation agent engine, self-improvement of scenarios can be secured without user intervention. According to the disclosed embodiments, beyond merely correcting and recovering from scenario errors, the automation agent (104) can understand the intent of a scenario through the scenario improvement apparatus (108) and automatically improve (Auto-Improving) a more enhanced scenario. As a result, the automation agent (104) can go beyond the role of simply mimicking and executing scenarios to also serve as a collaborator in scenario writing itself, thereby further expanding the functionality of Robotic Process Automation or Hyperautomation.

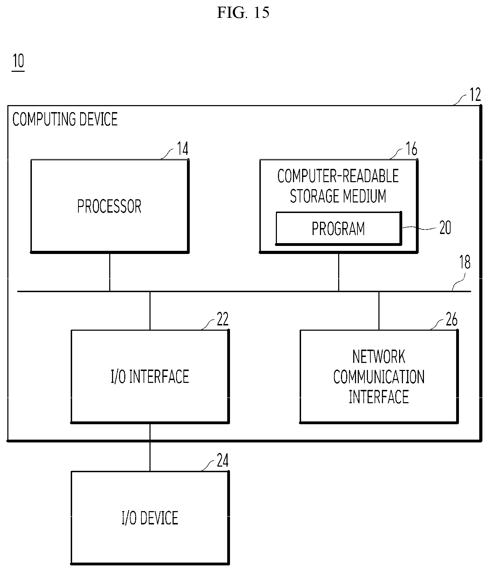

FIG. 15 is a block diagram illustrating a computing environment including a computing device suitable for use in the exemplary embodiments. In the illustrated embodiment, each component may have different functions and capabilities than those described below, and may include additional components other than those described below.

The illustrated computing environment (10) includes a computing device (12). In some embodiments, the computing device (12) may be the automation agent (104), the scenario execution environment (106), or the scenario improvement apparatus (108) according to one embodiment. The computing device (12) includes at least one processor (14), a computer-readable storage medium (16), and a communication bus (18). The processor (14) can cause the computing device (12) to operate according to the exemplary embodiments mentioned above. For example, the processor (14) may execute one or more programs stored in the computer-readable storage medium (16). The one or more programs may include one or more computer-executable instructions, which, when executed by the processor (14), are configured to cause the computing device (12) to perform operations according to the exemplary embodiment.

The computer-readable storage medium (16) is configured to store computer-executable instructions or program code, program data, and/or other suitable forms of information. The program (20) stored in the computer-readable storage medium (16) includes a set of instructions executable by the processor (14). In one embodiment, the computer-readable storage medium (16) may be memory (volatile memory such as random access memory, non-volatile memory, or an appropriate combination thereof), one or more magnetic disk storage devices, optical disk storage devices, flash memory devices, and other forms of storage media that can be accessed by the computing device (12) and store desired information, or a suitable combination thereof.

The communication bus (18) interconnects various other components of the computing device (12), including the processor (14) and the computer-readable storage medium (16).

The computing device (12) may also include one or more input/output interfaces (22) providing interfaces for one or more input/output devices (24), and one or more network communication interfaces (26). The input/output interface (22) and the network communication interface (26) are connected to the communication bus (18). The input/output device (24) may be connected to other components of the computing device (12) through the input/output interface (22). Exemplary input/output devices (24) may include input devices such as a pointing device (e.g., a mouse or trackpad), a keyboard, a touch input device (e.g., a touchpad or touchscreen), a voice or sound input device, various types of sensor devices, and/or a photographing device, and/or output devices such as a display device, a printer, a speaker, and/or a network card. An exemplary input/output device (24) may be included inside the computing device (12) as a component constituting the computing device (12), or may be connected to the computing device (12) as a separate device distinct from the computing device (12).

Although the present invention has been described in detail above through representative embodiments, those skilled in the art to which the present invention pertains will understand that various modifications are possible within the scope of the present invention with respect to the foregoing embodiments. Therefore, the scope of rights of the present invention should not be limited to the described embodiments, but should be determined not only by the appended claims but also by equivalents thereof.

## Claims

1. An automation scenario improvement method performed in a computing device having one or more processors and a memory storing one or more programs executed by the one or more processors, the method comprising:
dividing an input scenario comprising a plurality of activities into one or more segments;
generating natural language condensed information for one or more activities included in each divided segment; and
reconstructing the input scenario by applying the natural language condensed information to a large language model.

2. The method of claim 1, wherein the dividing the input scenario is configured to divide the plurality of activities into one or more segments such that an output-type activity among the plurality of activities becomes the last activity of each segment.

3. The method of claim 1, wherein the dividing the input scenario is configured to, when a control-type activity is present among the plurality of activities, create a new segment starting from an activity immediately following the control-type activity such that the control-type activity is excluded from the new segment.

4. The method of claim 1, wherein the generating of the natural language condensed information comprises:
generating natural language summary information corresponding to each of the plurality of activities; and
generating the natural language condensed information for each segment using the generated natural language summary information.

5. The method of claim 4, wherein the natural language summary information is generated by applying, to the large language model, one or more of an identifier, properties, property values corresponding to the properties, and a natural language-based activity description of a corresponding activity.

6. The method of claim 4, wherein the natural language condensed information is generated by merging natural language summary information of one or more activities included in each segment and applying the merged information to the large language model.

7. The method of claim 1, wherein the reconstructing of the scenario is configured to reconstruct activities for each segment such that the output-type activity located last in each segment is maintained.

8. The method of claim 1, wherein the natural language condensed information includes properties and property values of activities included in a corresponding segment, and the reconstructing of the scenario comprises applying the properties and the property values included in the natural language condensed information to the large language model.

9. The method of claim 1, wherein the reconstructing of the scenario further comprises additionally applying, to the large language model, a scenario that was reconstructed in a previous step but determined to be unsuitable.

10. The method of claim 1, wherein the reconstructing of the scenario further comprises:
dividing the reconstructed scenario into one or more segments and generating natural language condensed information for one or more activities in each divided segment;
comparing a similarity between natural language condensed information of the reconstructed scenario and natural language condensed information of the input scenario; and
determining whether the reconstructed scenario is valid based on the similarity comparison result.

11. The method of claim 10, wherein the determining of whether the reconstructed scenario is valid is configured to determine the reconstructed scenario as valid when the similarity comparison result is equal to or greater than a threshold value.

12. The method of claim 10, wherein the determining of whether the reconstructed scenario is valid is configured to determine the reconstructed scenario as invalid when the reconstructed scenario is identical to a previously failed scenario.

13. The method of claim 1, further comprising, after the reconstructing of the input scenario, determining whether the reconstructed scenario operates normally.

14. The method of claim 13, wherein the determining of whether the reconstructed scenario operates normally is configured to determine whether the reconstructed scenario operates normally by comparing an output value of the last activity of each divided segment with an output value when the input scenario operated normally.

15. An automation scenario improvement apparatus comprising:
one or more processors;
a memory; and
one or more programs, wherein the one or more programs are stored in the memory and configured to be executed by the one or more processors, and the one or more programs perform operations comprising:
dividing an input scenario comprising a plurality of activities into one or more segments;
generating natural language condensed information for one or more activities included in each divided segment; and
reconstructing the input scenario by applying the natural language condensed information to a large language model.
